# EUROPÄISCHE PATENTSCHRIFT

(11) **EP 2 762 691 B1**
(45) Veröffentlichungstag und Bekanntmachung des Hinweises auf die Patenterteilung: **28.06.2017**
(21) Anmeldenummer: 13195007.3
(22) Anmeldetag: 29.11.2013
(51) Int. Cl.: F01K 25/10

(54) **ORC-Anlage mit verbesserter Wärmebereitstellung**
ORC system with improved heat provision
Installation ORC avec production de chaleur améliorée

(30) Priorität: 31.01.2013 DE 102013201639
(43) Veröffentlichungstag der Anmeldung: 06.08.2014
(73) Patentinhaber: Siemens Aktiengesellschaft, 80333 München (DE)
(72) Erfinder: Haje, Detlef, Dr., 02828 Görlitz (DE)

(56) Entgegenhaltungen:
- WO-A1-2014/000830
- WO-A2-2008/101711
- DE-U1-202012 007 723
- US-A- 4 267 692
- US-A1- 2003 213 246
- US-A1- 2009 126 381

## Beschreibung

### Technisches Gebiet

Die vorliegende Erfindung betrifft eine Kraft-Wärme-Kopplungsanordnung, welche insbesondere nach einem Organic-Rankine-Cycle (ORC) Prozess arbeitet, und ein Verfahren zur Erzeugung von Nutzwärme.

### Hintergrund der Erfindung

Kraftwärmekopplungsanlagen, und insbesondere Organic Rankine Cycle (ORC)-Anlagen, werden zur Nutzung von Wärme aus verschiedenen Quellen, wie z.B. Biothermie, Biomassenverbrennung, konzentrierter Sonnenenergie oder Restwärme aus Industrieprozessen, verwendet.

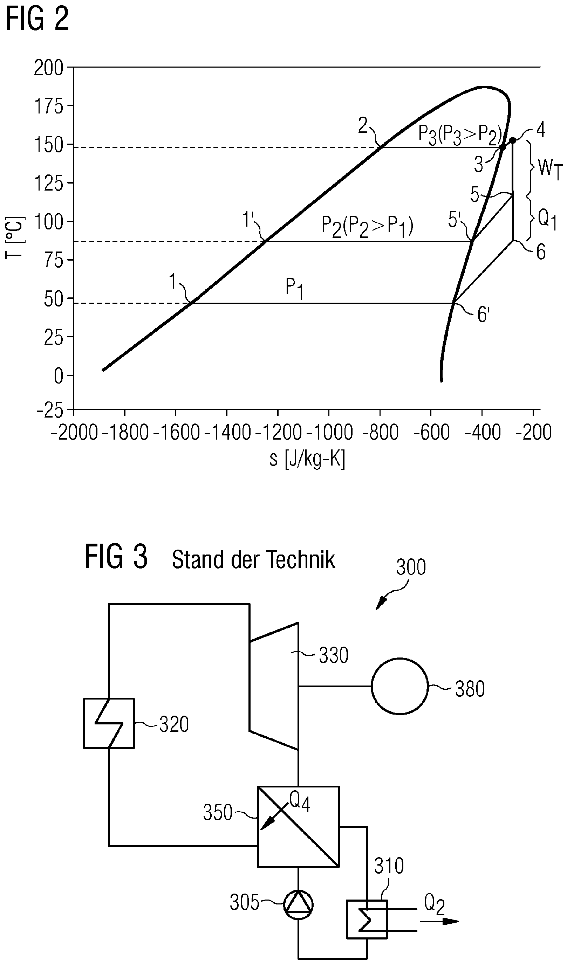

**Fig. 3** zeigt eine herkömmliche Kraft-Wärme-Kopplungsanordnung 300, welche üblicherweise eine herkömmliche Speisepumpe 305, einen herkömmlichen Kondensator 310, einen herkömmlichen Verdampfer 320 (Erhitzer), eine herkömmliche Turbine 330 (Expander) und einen herkömmlichen Rekuperator 350 aufweist. Typischerweise treibt die herkömmliche Turbine 300 einen herkömmlichen Generator 380 zur Stromerzeugung. Der Druckschrift WO 2008/101711 offenbart eine solche herkömmliche Kraft-Wärme-Kopplungsanordnung. ORC-Anlagen verwenden Arbeitsmittel, deren Verdampfungsverhalten (z.B. Druck, Temperatur) von dem Verdampfungsverhalten von Wasser abweicht. Damit können ORC-Anlagen auch bei niedrigeren Temperaturniveaus als Dampfkreisläufe, entsprechend dem Organic Rankine Cycle-Prozess, effektiv genutzt werden. Üblicherweise wird bei ORC-Anlagen, welche als Kraftwärmekopplungsanlagen betrieben werden, das Arbeitsmedium in der herkömmlichen Turbine 330 nicht auf den vorgegebenen Kondensatordruck entspannt. Das Arbeitsmedium wird mit dem herkömmlichen Kondensator 310 mit einem höheren Druck und einer höheren Temperatur zugeführt. In dem herkömmlichen Kondensator 310 erhitzt das Arbeitsmedium ein Nutzwärmemedium aus einem Nutzwärmekreislauf beispielsweise von ca. 60°C auf ca. 90°C. Da in der herkömmlichen Turbine 330 das Arbeitsmedium nicht vollständig expandiert und abgekühlt wird, weist das Arbeitsmedium an dem herkömmlichen Kondensator 310 ein hohes Temperatur- und Druckniveau auf, so dass am herkömmlichen Kondensator 310 eine große Wärmemenge bereitstellbar ist.

Aufgrund der hohen Temperatur an dem herkömmlichen Kondensator 310 weist dieser eine hohe Kondensatorwärme auf, wodurch wiederum ein hoher Kondensatordruck zum Kondensieren des Arbeitsmediums erforderlich ist. Dieser hohe Kondensatordruck bewirkt zwangsläufig eine deutliche Absenkung der Turbinenleistung der herkömmlichen Turbine 300 und somit des Wirkungsgrades der Stromerzeugung durch den herkömmlichen Generator 380.

### Darstellung der Erfindung

Es ist eine Aufgabe der vorliegenden Erfindung, eine Kraft-Wärmekopplungsanordnung zu schaffen, welche eine hohe Wärmeleistung und Stromerzeugungsleistung aufweist.

Diese Aufgabe wird mit einer Kraft-Wärme-Kopplungsanordnung, mit einem thermodynamischen System und mit einem Verfahren zur Gewinnung von Nutzwärme gemäß den unabhängigen Ansprüchen beschrieben.

Gemäß einem ersten Aspekt der vorliegenden Erfindung wird eine Kraft-Wärme-Kopplungsanordnung beschrieben. Die Kraft-Wärme-Kopplungsanordnung weist einen Verdampfer, eine Turbine, einen Wärmetauscher sowie einen Kondensator auf.

Der Verdampfer ist eingerichtet, ein Arbeitsmedium von einem ersten Zustand, z.B. einem flüssigen Zustand oder einem Zustand mit überkritischem Druck, in einen dampfförmigen (und z.B. überhitzten) oder überkritischen Zustand zu überführen.

Die Turbine dient zur Umwandlung von thermischer Energie in mechanische Arbeit, wobei die Turbine mit dem Verdampfer derart gekoppelt ist, dass das Arbeitsmedium von dem Verdampfer der Turbine in einen dampfförmigen Zustand zuführbar ist.

Der Wärmetauscher ist mit der Turbine gekoppelt, so dass das Arbeitsmedium in dem dampfförmigen Zustand von der Turbine dem Wärmetauscher zuführbar ist. Der Wärmetauscher ist ferner derart mit einer Nutzwärmeanordnung koppelbar, dass thermische Energie von einem Arbeitsmedium an ein Nutzfluid der Nutzwärmeanordnung abgebbar ist.

Dem Kondensator ist das Arbeitsmedium im dampfförmigen Zustand aus dem Wärmetauscher zuführbar, wobei der Kondensator eingerichtet ist, das Arbeitsmedium mittels Abkühlens von dem dampfförmigen Zustand in den ersten flüssigen Zustand zu überführen. Der Kondensator ist mit dem Verdampfer gekoppelt, so dass das Arbeitsmedium in dem ersten Zustand von dem Kondensator dem Verdampfer zuführbar ist.

Gemäß einem weiteren Aspekt der vorliegenden Erfindung wird ein thermodynamisches System beschrieben, welches die Kraft-Wärme-Kopplungsanordnung und die Nutzwärmeanordnung aufweist. Der Wärmetauscher ist derart mit der Nutzwärmeanordnung gekoppelt, dass thermische Energie von dem Arbeitsmedium an das Nutzfluid der Nutzwärmeanordnung abgebbar ist.

Gemäß einem weiteren Aspekt der vorliegenden Erfindung wird ein Verfahren zur Gewinnung von Nutzwärme beschrieben. Gemäß einem weiteren Aspekt der vorliegenden Erfindung wird ein Verfahren zur Gewinnung von Nutzwärme beschrieben. Gemäß dem Verfahren wird ein Arbeitsmedium von einem Verdampfer zu einer Turbine in einem dampfförmigen Zustand zugeführt. Mittels der Turbine wird thermische Energie des Arbeitsmediums in mechanische Arbeit umgewandelt. Das Arbeitsmedium wird in einem dampfförmigen Zustand von der Turbine zu einem Wärmetauscher zugeführt. Thermische Energie wird von dem Arbeitsmedium zu einem Nutzfluid einer Nutzwärme mittels des Wärmetauschers abgegeben. Anschließend wird das Arbeitsmedium in dampfförmigen Zustand von dem Wärmetauscher zu einem Kondensator zugeführt. Das Arbeitsmedium wird von dem dampfförmigen Zustand in den ersten flüssigen Zustand mittels des Kondensators überführt. Anschließend wird das Arbeitsmedium in flüssigem Zustand von dem Kondensator dem Verdampfer zugeführt.

Die oben beschriebene Kraft-Wärme-Kopplungsanordnung setzt einen thermodynamischen Kreisprozess um. Insbesondere wird ein Clausius-Rankine-Kreisprozess umgesetzt. Wie im Folgenden noch weiter erläutert, kann das Arbeitsmedium aus einem organischen Medium bestehen, sodass die Kraft-Wärme-Kopplungsanordnung insbesondere nach einem "Organic Rankine Cycle(ORC)"-Prozess arbeiten kann.

Der Clausius-Rankine-Kreisprozess und entsprechend auch der ORC-Kreisprozess weist insbesondere die oben beschriebene Turbine und den Kondensator auf. Zum Antreiben des Kreisprozesses und zur Druckerhöhung des Arbeitsmediums im flüssigen Zustand wird üblicherweise eine Speisepumpe verwendet, um einen Fluss des Arbeitsmediums zwischen den funktionalen Einheiten zu gewährleisten und das Arbeitsmedium zwischen dem Kondensator und dem Verdampfer mit Druck zu beaufschlagen. Rohrleitungen verbinden den Kondensator mit dem Verdampfer, den Verdampfer mit der Turbine und die Turbine mit dem Kondensator. Zwischen dem Kondensator und dem Verdampfer ist die Speisepumpe zwischengeschaltet.

Gemäß dem Clausius-Rankine-Kreisprozess wird zunächst mechanische Energie erzeugt, indem das Arbeitsmittel in dem Kreisprozess abwechselnd bei niedrigem Druck (Kondensatordruck) kondensiert wird und bei hohem Druck verdampft bzw. in einen überkritischen, dampfförmigen Zustand überführt wird. Der Druck wird von der Speisepumpe durch Aufwand von Arbeit aufgebracht. Ferner wird dem Arbeitsmedium in dem Verdampfer thermische Energie zugeführt. In der Turbine wird aus dem hohen Druck und der thermischen Energie des Arbeitsmediums mechanische Arbeit erzeugt.

In der Turbine wird das Arbeitsmedium im dampfförmigen Zustand adiabat entspannt, so dass dadurch insbesondere aus der thermischen Energie des Arbeitsmediums mechanische Arbeit erzeugt wird. Anschließend wird in dem Kondensator das Arbeitsmedium im dampfförmigen Zustand nahezu isobar bei einem vorgegebenen Kondensatordruck kondensiert, so dass das Arbeitsmedium anschließend im flüssigen Zustand vorliegt. Anschließend wird in der Speisepumpe der Druck des Arbeitsmediums nahezu adiabat und nahezu isotrop erhöht. Nach der Speisepumpe wird das Arbeitsmedium in flüssigem Zustand oder in dem unterkritischen, dampfförmigen Zustand dem Verdampfer zugeführt, wobei das Arbeitsmedium zunächst bis zum Verdampfungspunkt erwärmt werden kann und dann beispielsweise (nahezu isotherm) verdampft bzw. überhitzt werden kann.

Bei einer weiteren beispielhaften Ausführungsform wird das dampfförmige Arbeitsmedium in dem Verdampfer durch weitere Erwärmung überhitzt. Das Arbeitsmedium wird in einem überhitzten Zustand, wie oben beschrieben, in der Turbine entspannt, so dass das Risiko einer vorzeitigen Kondensation des Arbeitsmediums in der Turbine reduziert wird.

Der Kondensator kann beispielsweise als flüssigkeitsgekühlter (z.B. wassergekühlter) Kondensator oder als luftgekühlter Kondensator, welcher beispielsweise einen Ventilator aufweist, ausgebildet sein. Als flüssigkeitsgekühlter Kondensator kann insbesondere ein flüssigkeitsgekühlter Oberflächenkondensator, beispielsweise in der Form eines Rohrbündelwärmeübertragers oder eines Plattenwärmetauschers, eingesetzt werden.

Die Turbine ist eine Strömungsmaschine, welche die innere Energie des dampfförmigen Arbeitsmediums in Rotationsenergie und letztlich in mechanische Arbeitsenergie umwandelt. Die Turbine weist dazu insbesondere Rotorblätter auf, welche auf einer Abtriebswelle befestigt sind. Aufgrund der Umströmung des Arbeitsmediums an den Rotorblättern wird ein Teil der inneren Energie des Arbeitsmediums, welches beispielsweise aus Bewegungs-, Lage- und Druckenergie zusammengesetzt ist, entzogen, und auf die Rotorblätter übertragen. Dies führt dazu, dass sich die Abtriebswelle der Turbinen in Drehung versetzt, so dass nutzbare Leistung, bzw. mechanische Arbeit, erzeugt wird. Beispielsweise kann an die Abtriebswelle ein Generator oder eine andere Arbeitsmaschine angekoppelt werden.

Die Nutzwärmeanordnung ist beispielsweise eine Fernwärmeanordnung. Ferner kann die Nutzwärmeanordnung die Nutzwärme des Nutzfluids in z.B. angeschlossenen chemischen Prozessen verwenden.

Der Verdampfer wandelt das flüssige Arbeitsmedium in einen dampfförmigen und z.B. überkritischen Zustand um. Dazu kann dem Verdampfer thermische Energie, beispielsweise aus einem Verbrennungsprozess, zugeführt werden. Ferner kann der Verdampfer an eine zu kühlende Heizanordnung gekoppelt werden, damit ein Heizfluid der Heizanordnung gekühlt wird und das Arbeitsmedium im Verdampfer erwärmt wird. Der Verdampfer ist beispielsweise ein Wärmetauscher, in welchem in einem ersten Bereich des Wärmetauschers das Arbeitsmedium einspeisbar und abführbar ist und in einem zweiten Bereich das Heizfluid der Heizanordnung einspeisbar und abführbar ist. Der Verdampfer ist derart angeordnet, dass zwischen dem ersten Bereich und dem zweiten Bereich thermische Energie, beispielsweise mittels Konvektion, zwischen dem Heizfluid und dem Arbeitsmedium austauschbar ist.

Das Heizfluid und das Nutzfluid können als Flüssigkeit, als Dampf oder als Gas vorliegen.

Bei konventionellen Ansätzen wird der Turbine das Arbeitsmedium abgeführt, bevor es völlig entspannt und abgekühlt ist. Dadurch weist das Arbeitsmedium einen erhöhten Druck und eine hohe Temperatur auf. Aufgrund dieser hohen Werte der Prozessparameter Druck und Temperatur kann in dem Kondensator eine große Wärmemenge bereitgestellt werden, welche ein Nutzfluid einer Nutzanordnung zuführbar ist. Allerdings liegt somit am Kondensator das Arbeitsmedium mit einem hohen Druck vor, so dass der entsprechende Kondensatordruck, bei welchem das Arbeitsmedium kondensiert, ebenfalls hoch ist. Dies wiederum führt dazu, dass eine deutliche Absenkung der Turbinenleistung und des Wirkungsgrads der Stromerzeugung in einem angeschlossenen Generator verursacht wird.

Mit der vorliegenden Erfindung wird anstelle einer Kondensation des Arbeitsmediums bei hohem Druck in dem Kondensator das Arbeitsmedium vorab einem Wärmetauscher zugeführt, welcher der Turbine nachgeschaltet ist. Das Arbeitsmedium kann somit in der Turbine (z.B. vollständig) entspannen. In dem Wärmetauscher wird dem Arbeitsmedium thermische Energie entnommen und diese Abwärme an ein Nutzfluid der Nutzwärmeanordnung zugeführt. Erst nachdem das Arbeitsmedium in dem Wärmetauscher die thermische Energie an das Nutzfluid abgegeben hat, wird das Arbeitsmedium dem Kondensator zugeführt. Das Arbeitsmedium weist an dem Eingang des Kondensators einen niedrigeren Kondensatordruck im Vergleich zu dem oben beschriebenen konventionellen Vorgehen auf. Mit diesem niedrigeren Kondensatordruck ist zudem eine geringere Kondensationstemperatur notwendig, um das Arbeitsmedium in dem Kondensator von dem gasförmigen Zustand in den flüssigen Zustand zu überführen. Somit wird mit anderen Worten ein niedrigerer Kondensationsdruck des Arbeitsmediums am Kondensatoreingang bereitgestellt, so dass ein höheres Gefälle des Kreisprozesses, insbesondere ein höheres Prozessgefälle zwischen dem Eingang des Arbeitsmediums an der Turbine und dem Eingang des Arbeitsmediums am Kondensator, erzielt wird, so dass eine höhere Leistung aus dem Arbeitsmedium entzogen werden kann (insbesondere Stromleistung).

Zusammenfassend ist festzustellen, dass mit der oben beschriebenen Kraft-Wärme-Kopplungsanordnung eine effizientere Anordnung zur Erzeugung von mechanischer Arbeit (Strom) einerseits und Nutzwärme andererseits im Vergleich zu konventionellen Ansätzen erzielt werden kann. Die thermische Energie des Prozessfluids trägt zum Betrieb des Kreisprozesses des Systems zur Umwandlung von thermischer Energie in mechanische Arbeit bei.

Gemäß einer weiteren beispielhaften Ausführungsform ist die Turbine derart eingerichtet, dass das gesamte Arbeitsmedium, welches an einem Turbineneingang der Turbine in die Turbine einspeisbar ist, an einen Turbinenausgang der Turbine abführbar ist. Mit der oben beschriebenen Ausführungsform wird konkretisiert, dass das Arbeitsmedium, welches dem Wärmetauscher und dem Kondensator zuführbar ist, von der letzten Turbinenstufe der Turbine, bzw. der Niederdruckstufe, entnommen wird.

Gemäß einer weiteren beispielhaften Ausführungsform weist das Arbeitsmedium ein organisches Medium auf, wie beispielsweise ein Silikonöl, Toluol, Isopentan und/oder Isooktan. Ferner kann als organisches Medium auch Kältemittel wie R134a, R236 oder R1234yf verstanden werden. Besteht das Arbeitsmedium aus einem organischen Medium, so kann mittels der Kraft-Wärme-Kopplungsanordnung der sogenannte Organic-Rankine-Cycle (ORC)-Prozess durchgeführt werden. Das organische Arbeitsmedium weist eine niedrigere Verdampfungstemperatur als Wasser auf. Dadurch ist der ORC-Prozess insbesondere bei einen geringen Temperaturgefälle des Arbeitsmediums zwischen dem Verdampfer und dem Kondensator vorteilhaft, da bereits bei einem geringen Temperaturgefälle zwischen dem Verdampfer und dem Kondensator ein effizienter Betrieb des ORC-Prozesses möglich ist.

Mit der vorliegenden beispielhaften Ausführungsform der Erfindung kann somit effizient Abwärme in einem ORC-Prozess genützt werden. Die Kraft-Wärme-Kopplungsanordnung wird mit dem organischen Arbeitsmedium betrieben, welches die Eigenschaft besitzt, im Vergleich zu Wasser bereits bei moderatem geringem Druck und moderaten Umgebungstemperatur zu kondensieren. In dem Verdampfer reicht eine geringere thermische Energiezufuhr im Vergleich zu Wasser aus, um das organische Arbeitsmedium zu verdampfen.

Gemäß einer weiteren beispielhaften Ausführungsform ist der Verdampfer derart an eine Heizeinrichtung koppelbar, dass thermische Energie von einem Heizfluid der Heizanordnung an das Arbeitsmedium in dem Verdampfer abgebbar ist. Der Verdampfer ist eingerichtet, das Arbeitsmedium mittels der thermischen Energie aus der Heizanordnung von dem flüssigen Zustand in den dampfförmigen Zustand zu überführen.

Gemäß der Erfindung weist die Kraft-Wärmekopplungsanordnung einen ersten Rekuperator mit einem ersten Fluidlauf und einem zweiten Fluidlauf auf. Der erste Rekuperator ist mit dem Wärmetauscher und dem Kondensator derart gekoppelt, dass das Arbeitsmedium von dem Wärmetauscher dem ersten Fluidlauf zuführbar ist und ferner von dem ersten Fluidlauf dem Kondensator zuführbar ist. Der erste Rekuperator ist ferner mit dem Kondensator und dem Verdampfer derart gekoppelt, dass das Arbeitsmedium von dem Kondensator dem zweiten Fluidlauf zuführbar ist und ferner von dem zweiten Fluidlauf dem Verdampfer zuführbar ist. Der erste Fluidlauf und der zweite Fluidlauf sind derart zueinander gekoppelt und angeordnet, dass thermische Energie von dem Arbeitsmedium in dem ersten Fluidlauf, in welchem das Arbeitsmedium insbesondere gasförmig vorliegt, an das Arbeitsmedium in dem zweiten Fluidlauf, in welchem das Arbeitsmedium flüssig vorliegt, übertragbar ist. Gemäß einer weiteren beispielhaften Ausführungsform ist ein zweiter Rekuperator mit einem ersten Fluidlauf und einem zweiten Fluidlauf, wobei der zweite Rekuperator mit der Turbine und dem Wärmetauscher derart gekoppelt ist, dass das Arbeitsmedium von der Turbine dem ersten Fluidlauf zuführbar ist und ferner von dem ersten Fluidlauf dem Wärmetauscher zuführbar ist. Der zweite Rekuperator ist ferner mit dem Kondensator und dem Verdampfer derart gekoppelt, dass das Arbeitsmedium von dem Kondensator dem zweiten Fluidlauf zuführbar ist und ferner von dem zweiten Fluidlauf dem Verdampfer zuführbar ist. Der erste Fluidlauf und der zweite Fluidlauf sind derart zueinander angeordnet, dass thermische Energie von dem Arbeitsmedium in dem ersten Fluidlauf an das Arbeitsmedium in dem zweiten Fluidlauf übertragbar ist.

Mittels des ersten und zweiten Rekuperators wird dem Arbeitsmedium vor dem Kondensator eine Wärmemenge entnommen und dem Arbeitsmedium nach dem Kondensator bzw. vor dem Verdampfer zugeführt. Somit können die Rekuperatoren noch eine Wärmemenge an das dem Verdampfer zuströmende Arbeitsmedium zuführen. Dadurch muss weniger Wärmemenge in dem Verdampfer dem Arbeitsmedium zugeführt werden, um dieses zu verdampfen.

Gemäß einer weiteren beispielhaften Ausführungsform weist die Kraft-Wärmekopplungsanordnung eine Bypassleitung auf, welche mit der Turbine einerseits und mit dem Kondensator andererseits gekoppelt ist, so dass das Arbeitsmedium in dem dampfförmigen Zustand von der Turbine dem Kondensator direkt zuführbar ist. Mittels der Bypassleitung kann ein beliebiger Anteil des Arbeitsmediums nach der Turbine dem Wärmetauscher zugeführt und ein anderer beliebiger Anteil direkt durch die Bypassleitung dem Kondensator zugeführt werden. Somit kann die Wärmeabgabe des Arbeitsmediums in dem Wärmetauscher an das Nutzfluid gezielt gesteuert werden.

Ferner weist die Kraft-Wärmekopplungsanordnung ein Steuerventil auf, welches zwischen der Turbine und dem Kondensator derart angeordnet ist, dass ein Massenstrom des Arbeitsmediums, welcher durch die Wärmetauschanordnung fließt, einstellbar ist. Beispielsweise kann ein Steuerventil ein erstes Steuerventil direkt in der Bypassleitung angeordnet sein. Zusätzlich oder alternativ kann ein zweites Steuerventil als Steuerventil in einer Zuleitung zu dem Wärmetauscher angeordnet sein und ein drittes Steuerventil als Steuerventil nach dem Wärmetauscher in einer entsprechenden Leitung angeordnet sein. Die entnehmbaren Wärmemengen und ihre Temperaturen können durch die Steuerung des Massenstroms, welcher durch den Wärmetauscher fließt, gezielt beeinflusst werden.

Gemäß einer weiteren beispielhaften Ausführungsform weist die Kraft-Wärmekopplungsanordnung einen dritten Rekuperator mit einem ersten Fluidlauf und einem zweiten Fluidlauf auf, wobei der dritte Rekuperator in der Bypassleitung derart angeordnet ist, dass zumindest ein Teil des Arbeitsmediums von der Turbine dem ersten Fluidlauf zuführbar ist und ferner von dem ersten Fluidlauf dem Kondensator zuführbar ist. Der dritte Rekuperator ist ferner mit dem Kondensator und dem Verdampfer derart gekoppelt, dass das Arbeitsmedium von dem Kondensator dem zweiten Fluidlauf zuführbar ist und ferner von dem zweiten Fluidlauf dem Verdampfer zuführbar ist. Der erste Fluidlauf und der zweite Fluidlauf sind derart zueinander angeordnet, dass thermische Energie von dem Arbeitsmedium in dem ersten Fluidlauf an das Arbeitsmedium in dem zweiten Fluidlauf übertragbar ist.

Gemäß einer weiteren beispielhaften Ausführungsform weist die Kraft-Wärmekopplungsanordnung eine Steuereinrichtung auf, welche den Bedarf an Nutzwärme ermittelt und daraufhin das Steuerventil derart steuern kann, dass ein gewünschter Massenstrom des Arbeitsmediums von der Turbine zu dem Wärmetauscher geleitet wird.

Gemäß einer weiteren beispielhaften Ausführungsform weist die Kraftstoff-Wärmekopplungsanordnung einen Generator auf, welcher mit der Turbine derart gekoppelt ist, dass der Generator mittels der Turbine antreibbar ist.

In der Kraft-Wärmekopplungsanordnung muss am Kondensator ein bestimmter Kondensatordruck mit einer bestimmten Temperatur vorliegen, um das Arbeitsmedium zu kondensieren bzw. auf einen bestimmten unterkritischen Verdampfungszustand zu bringen. Mit einem Wärmetauscher gemäß der vorliegenden Erfindung ist gezielt der Massenstrom und z.B. die Temperatur des Arbeitsmediums einstellbar, ohne dass ein bestimmter höherer Kondensatordruck eingehalten werden muss. Dies erhöht im Vergleich zu konventionellen Ansätzen die Flexibilität der bereitstellbaren Wärmemenge, da weniger auf die Drücke des Arbeitsmediums geachtet werden muss.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine beispielhafte Ausführungsform der Kraft-Wärmekopplungsanordnung gemäß einer beispielhaften Ausführungsform der vorliegenden Erfindung;
Fig. 2 zeigt ein T-S-Diagramm, in welchem ein beispielhafter Kreisprozess der Kraft-Wärmekopplungsanordnung gemäß einem Ausführungsbeispiel der vorliegenden Erfindung dargestellt wird; und
Fig. 3 zeigt eine herkömmliche Kraft-Wärme-Kopplungsanordnung.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

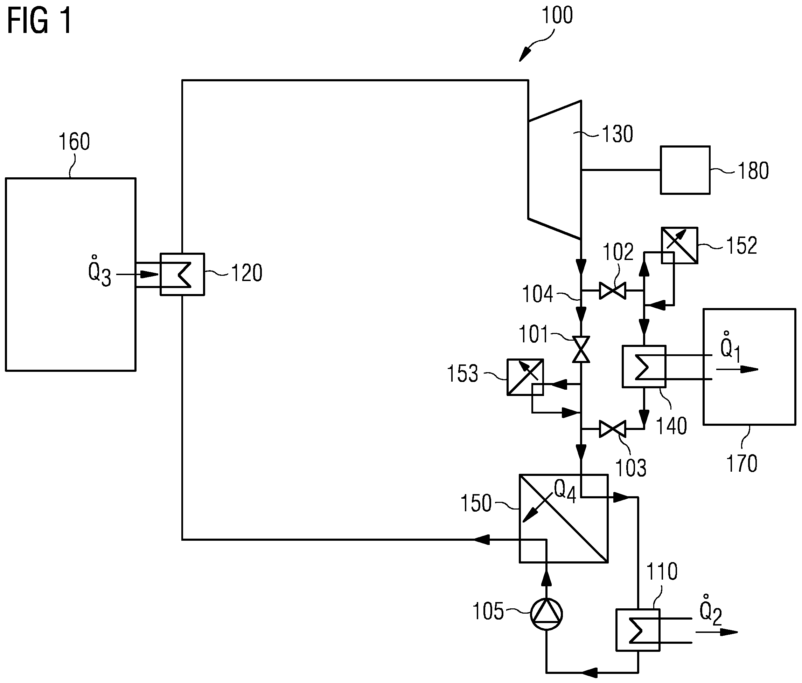

**Fig. 1** zeigt eine Kraft-Wärmekopplungsanordnung 100. Die Kraft-Wärmekopplungsanordnung 100 weist einen Verdampfer 120, eine Turbine 130, einen Wärmetauscher 140 und einen Kondensator 110 auf. Der Verdampfer 120 ist eingerichtet, ein Arbeitsmedium von dem ersten Zustand, z.B. einem flüssigen Zustand, in einen dampfförmigen (und z.B. überhitzten) Zustand zu überführen. Die Turbine 130 dient zur Umwandlung von thermischer Energie in mechanische Arbeit. Beispielsweise kann mittels der erzeugten mechanischen Arbeit ein Generator 180 zur Erzeugung elektrischer Energie angekoppelt werden. Die Turbine 130 ist mit dem Verdampfer 120 derart gekoppelt, dass das Arbeitsmedium von dem Verdampfer 120 der Turbine in einem dampfförmigen Zustand zuführbar ist.

Der Wärmetauscher 140 ist mit der Turbine 130 gekoppelt ist, so dass das Arbeitsmedium in dem dampfförmigen Zustand von der Turbine 130 dem Wärmetauscher 140 zuführbar ist.

Der Wärmetauscher 140 ist derart mit einer Nutzwärmeanordnung 170 koppelbar, dass thermische Energie von dem Arbeitsmedium an ein Nutzfluid der Nutzwärmeanordnung 170 abgebbar ist.

Der Kondensator 110, welchem das Arbeitsmedium in dampfförmigen Zustand aus dem Wärmetauscher 140 und/oder aus der Turbine 130 zuführbar ist, ist eingerichtet, das Arbeitsmedium mittels Kühlens von dem dampfförmigen Zustand in einen flüssigen Zustand oder einen unterkritisch, dampfförmigen Zustand zu überführen. Der Kondensator 110 ist mit dem Verdampfer 120 gekoppelt, so dass das Arbeitsmedium in dem flüssigen Zustand oder dem unterkritisch, dampfförmigen Zustand von dem Kondensator dem Verdampfer zuführbar ist.

Wie in Fig. 1 dargestellt, ist der Wärmetauscher 140 nach der Turbine 130 angeordnet. Das Arbeitsmedium, welches die Turbine 130 verlässt, kann einerseits durch eine Bypassleitung 104 direkt dem Kondensator 140 zugeführt werden oder dem Wärmetauscher 140 zugeführt werden.

Zur Steuerung des Massenstroms des Arbeitsmediums, welches dem Wärmetauscher 140 zugeführt wird, dienen Steuerventile 101, 102, 103. Beispielsweise kann ein erstes Steuerventil 101 in der Bypassleitung 104 angeordnet werden. Ein zweites Steuerventil 102 kann in einer Zuführleitung zum Wärmetauscher 140 angeordnet sein und/oder ein drittes Steuerventil 103 kann in einer Abfuhrleitung des Wärmetauschers 140 angeordnet sein.

Die Turbine 130 ist insbesondere derart eingerichtet, dass das gesamte Arbeitsmedium, welches an einem Turbineneingang der Turbine in die Turbine einspeisbar ist, an einem Turbinenausgang der Turbine abführbar ist. Von dem Turbinenausgang wird das Arbeitsmedium direkt der Bypassleitung 104 und/oder dem Wärmetauscher 140 zugeführt. An die Wärmetauschanordnung 140 ist die Nutzwärmeanordnung 170 gekoppelt. In dem Wärmetauscher 140 wird eine Abwärme Q1 von dem Arbeitsmedium auf das Nutzfluid abgegeben. Das Nutzfluid kann beispielsweise eine gewisse Vorlauftemperatur von beispielsweise ungefähr 50-70° C aufweisen, wobei in dem Wärmetauscher mittels der Abwärme Q1 des Arbeitsmediums das Nutzfluid auf ca. 90° C aus dem Wärmetauscher 140 abgeführt werden.

In dem Kondensator 110 wird das Arbeitsmedium kondensiert. Der Kondensator 110 weist beispielsweise eine Luftkühlung (Gebläse, Ventilator) auf. Ferner kann dem Kondensator 110 ein Kühlmittel zugeführt werden, an welches das Arbeitsmedium Kondensationswärme bzw. Abwärme Q2 abgibt. Da das Arbeitsmedium bereits in dem Wärmetauscher 140 thermische Energie abgegeben hat, ist das Druckniveau und das Temperaturniveau des Arbeitsmediums im Kondensator 110 gering, so dass bei Raumtemperatur von ca. 20-30°C und einem entsprechend geringen Kondensatordruck das Arbeitsmedium kondensiert oder auf einen unterkritischen, dampfförmigen Zustand gebracht werden kann.

Ferner kann optional vor dem Kondensator 110, wie in Fig. 1 dargestellt, ein erster Rekuperator 150, ein zweiter Rekuperator 152 und/oder ein dritter Rekuperator 153 zwischengeschaltet werden.

Der erste Rekuperator 150 weist einen ersten Fluidlauf und einen zweiten Fluidlauf auf. Im ersten Fluidlauf durchströmt das Arbeitsmedium, welches dem Kondensator 110 zuführbar ist, den ersten Rekuperator 150. Der zweite Fluidlauf wird durch das flüssige Arbeitsmedium durchströmt, welches aus dem Kondensator 110 kommt. In dem ersten Rekuperator 150 wird ein Wärmeübergang Q4 erzeugt, wodurch das Arbeitsmedium in dem ersten Fluidlauf thermische Energie an das Arbeitsmedium in dem zweiten Fluidlauf abgibt. Somit kann das Arbeitsmedium vor Eintritt in den Kondensator 110 weiter abgekühlt werden, so dass weniger Abwärme Q2 am Kondensator 110 abgeführt werden muss. Darüber hinaus ist weniger Wärmezufuhr Q3 am Verdampfer 160 zur Verdampfung des Arbeitsmediums notwendig, da im ersten Rekuperator 150 das Arbeitsmedium bereits vorgewärmt wird.

Der zweite Rekuperator 152 weist entsprechend einen ersten Fluidlauf und einen zweiten Fluidlauf auf. Im ersten Fluidlauf durchströmt das Arbeitsmedium, welches aus der Turbine 130 eingespeist wird und dem Wärmetauscher 140 zuführbar ist, den zweiten Rekuperator 152. Der zweite Fluidlauf wird durch das flüssige Arbeitsmedium durchströmt, welches beispielsweise aus dem Kondensator 110 kommt. In dem zweiten Rekuperator 152 wird ein Wärmeübergang erzeugt, wodurch das Arbeitsmedium in dem ersten Fluidlauf thermische Energie an das Arbeitsmedium in dem zweiten Fluidlauf abgibt.

Der dritte Rekuperator 153 weist entsprechend einen ersten Fluidlauf und einen zweiten Fluidlauf auf. Im ersten Fluidlauf durchströmt das Arbeitsmedium, welches aus der Turbine 130 eingespeist wird und dem Kondensator 110 oder dem ersten Rekuperator 150 zuführbar ist, den dritten Rekuperator 153. Der zweite Fluidlauf wird durch das flüssige Arbeitsmedium durchströmt, welches beispielsweise aus dem Kondensator 110 kommt. In dem dritten Rekuperator 153 wird ein Wärmeübergang erzeugt, wodurch das Arbeitsmedium in dem ersten Fluidlauf thermische Energie an das Arbeitsmedium in dem zweiten Fluidlauf abgibt.

Zwischen dem Kondensator 110 und dem Verdampfer 120 ist zudem eine Speisepumpe 105 angeordnet, welche bevorzugt isotherm den Druck im flüssigen Arbeitsmedium erhöht.

An dem Verdampfer 120 wird eine Wärmezufuhr Q3 zugeführt, um das Arbeitsmedium im Verdampfer 120 zu verdampfen. Die thermische Energie kann von einer Heizanordnung 160 stammen, welche die Wärmezufuhr Q3 am Verdampfer 120 bereitstellt. Die Heizanordnung 160 kann dadurch gekühlt werden. Die Heizanordnung 160 weist beispielsweise einen internen chemischen Prozess auf, welcher gekühlt werden muss. Ferner kann die Heizanordnung 160 beispielsweise eine beliebige Arbeitsmaschine darstellen, welche gekühlt werden muss. Diese Kühlung kann beispielsweise durch die Kopplung an den Verdampfer 120 bereitgestellt werden, um eine Wärmezufuhr Q3 von der Heizanordnung 160 zu dem Verdampfer 120 bereitzustellen. Somit kann auch Prozesswärme (heiße Abgasströme) genutzt werden.

Da im Vergleich zu herkömmlichen Ansätzen mit der beschriebenen Kraft-Wärmekopplungsanordnung 100 bereits im Wärmetauscher 140 Abwärme Q1 entnommen wird (und optional am Kondensator 110 und am Rekuperator 150) ist die Kondensationstemperatur und der Kondensatordruck des Arbeitsmediums am Kondensator 110 geringer als bei herkömmlichen Anordnungen. Bei herkömmlichen Anordnungen wird direkt von der Turbine 130 das Arbeitsmedium dem Kondensator 110 zugeführt, um dort Abwärme an die Nutzwärmeanordnung 170 abzugeben. Hierdurch ist ein hoher Kondensatordruck im Kondensator 110 gegeben.

**Fig. 2** zeigt beispielhaft ein T-S-Diagramm für z.B. Isopentan als Arbeitsmedium, in welchem der Kreisprozess der Kraft-Wärmekopplungsanordnung 100 dargestellt wird. Zwischen den Punkten 1 und 2 wird das Arbeitsmedium beispielsweise mittels der Speisepumpe 105 bedruckt und erwärmt. Zwischen den Punkten 2 und 3 wird das Arbeitsmedium in dem Verdampfer 120 verdampft und beispielsweise bis zum Punkt 4 überhitzt. Anschließend wird zwischen den Punkten 4 und 5 in der Turbine 130 mechanische Arbeit erzeugt. Dadurch wird das Arbeitsmedium abgekühlt und entspannt. Nach Ausgang der Turbine 130 wird das Arbeitsmedium dem Wärmetauscher 140 zugeführt. In dem Wärmetauscher 140 wird die Abwärme Q1 abgegeben. An Punkt 6' liegt das Arbeitsmedium bei ca. 48°C mit einem Druck P1 vor. Zwischen den Punkten 6'-1 wird das Arbeitsmedium in dem Kondensator 110 kondensiert und liegt an Punkt 1 erneut in flüssigem Zustand bei ca. 48°C vor. Der Druck P1 stellt somit den Kondensatordruck dar.

Das Prozessgefälle, welches indikativ für den Wirkungsgrad des Prozesses ist, kann zwischen den Punkten 4 und 6 bzw. 6' abgelesen werden.

Ferner ist in Fig. 2 ein herkömmlicher Kreisprozess dargestellt. Zwischen den Punkten 1' und 2 wird das Arbeitsmedium beispielsweise von 80°C und einem Druck P2 auf eine höhere Temperatur und einen Druck P3 erhöht. Zwischen den Punkten 2 und 4 wird das Arbeitsmedium in dem Verdampfer 120 verdampft und überhitzt. Anschließend wird das Arbeitsmedium der Turbine 130 zugeführt und zwischen den Punkten 4 und 5 entspannt und abgekühlt, so dass mechanische Arbeit WT erzeugt wird. An dem Punkt 5 bzw. 5' wird das Arbeitsmedium dem Kondensator 110 zugeführt und bei einem Kondensatordruck P2 und einer Temperatur von ungefähr 80° C kondensiert. Der Druck P2 ist größer als P1.

Aus Fig. 2 wird deutlich, dass das Prozessgefälle zwischen den Punkten 4 und 5 in dem herkömmlichen Prozess geringer ist als das Prozessgefälle zwischen den Punkten 4 und 6 gemäß dem neuen Kreisprozess der erfindungsgemäßen Kraft-Wärmekopplungsanordnung 100. Dies zeigt die erhöhte Effizienz der Kraft-Wärmekopplungsanordnung 100 gemäß der vorliegenden Erfindung.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kraft-Wärme-Kopplungsanordnung (100) aufweisend
einen Verdampfer (120),
wobei der Verdampfer (120) eingerichtet ist ein Arbeitsmedium von einem ersten Zustand, insbesondere einem flüssigen Zustand, in einen dampfförmigen Zustand zu überführen,
eine Turbine (130) zur Umwandlung von thermischer Energie in mechanische Arbeit,
wobei die Turbine (130) mit dem Verdampfer (120) derart gekoppelt ist, dass das Arbeitsmedium von dem Verdampfer (120) der Turbine (130) in dem dampfförmigen Zustand zuführbar ist,
einen Wärmetauscher (140), welcher mit der Turbine (130) gekoppelt ist, so dass das Arbeitsmedium von der Turbine (130) in dem dampfförmigen Zustand dem Wärmetauscher (140) zuführbar ist,
wobei der Wärmetauscher (140) derart mit einer Nutzwärmeanordnung (170) koppelbar ist, dass thermische Energie vom dem Arbeitsmedium an ein Nutzfluid der Nutzwärmeanordnung (170) abgebbar ist,
einen Kondensator (110), welchem das Arbeitsmedium aus dem Wärmetauscher (140) in dampfförmigen Zustand zuführbar ist,
wobei der Kondensator (110) eingerichtet ist das Arbeitsmedium mittels Abkühlens von dem dampfförmigen Zustand in den ersten Zustand zu überführen, und
wobei der Kondensator (110) mit dem Verdampfer (120) gekoppelt ist, so dass das Arbeitsmedium in dem ersten Zustand von dem Kondensator (110) dem Verdampfer (120) zuführbar ist, und **dadurch gekennzeichnet, dass** die Kraft-Wärme-Kopplungsanordnung einen ersten Rekuperator (150) mit einem ersten Fluidlauf und einem zweiten Fluidlauf aufweist, wobei der erste Rekuperator (150) mit dem Wärmetauscher (140) und dem Kondensator (110) derart gekoppelt ist, dass das Arbeitsmedium von dem Wärmetauscher (140) dem ersten Fluidlauf zuführbar ist und ferner von dem ersten Fluidlauf dem Kondensator (110) zuführbar ist,
wobei der erste Rekuperator (150) ferner mit dem Kondensator (110) und dem Verdampfer (120) derart gekoppelt ist, dass das Arbeitsmedium von dem Kondensator (110) dem zweiten Fluidlauf zuführbar ist und ferner von dem zweiten Fluidlauf dem Verdampfer (120) zuführbar ist, und
wobei der erste Fluidlauf und der zweite Fluidlauf derart zueinander angeordnet sind, dass thermische Energie von dem Arbeitsmedium in dem ersten Fluidlauf an das Arbeitsmedium in dem zweiten Fluidlauf übertragbar ist.

2. Kraft-Wärme-Kopplungsanordnung (100) gemäß Anspruch 1,
wobei die Turbine (130) derart eingerichtet ist, dass das gesamte Arbeitsmedium, welches an einem Turbineneingang der Turbine (130) in die Turbine (130) einspeisbar ist, an einem Turbinenausgang der Turbine (130) abführbar ist.

3. Kraft-Wärme-Kopplungsanordnung (100) gemäß Anspruch 1 oder 2,
wobei das Arbeitsmedium ein organisches Medium, insbesondere Silikonöl, Toluol, Iso-Pentan, Iso-Oktan, R134a, R236, R1234ze und/oder R1234yf, aufweist.

4. Kraft-Wärme-Kopplungsanordnung (100) gemäß einem der Ansprüche 1 bis 3,
wobei der Verdampfer (120) derart an eine Heizanordnung (160) koppelbar ist, dass thermische Energie von einem Heizfluid der Heizanordnung (160) an das Arbeitsmedium in dem Verdampfer (120) abgebbar ist, und
wobei der Verdampfer (120) eingerichtet ist das Arbeitsmedium mittels der thermischen Energie aus der Heizanordnung (160) von dem flüssigen Zustand in den dampfförmigen Zustand zu überführen.

5. Kraft-Wärme-Kopplungsanordnung (100) gemäß einem der Ansprüche 1 bis 4, ferner aufweisend
einen zweiten Rekuperator (152) mit einem ersten Fluidlauf und einem zweiten Fluidlauf,
wobei der zweite Rekuperator (152) mit der Turbine (130) und dem Wärmetauscher (140) derart gekoppelt ist, dass das Arbeitsmedium von der Turbine (130) dem ersten Fluidlauf zuführbar ist und ferner von dem ersten Fluidlauf dem Wärmetauscher (140) zuführbar ist,
wobei der zweite Rekuperator (152) ferner mit dem Kondensator (110) und dem Verdampfer (120) derart gekoppelt ist, dass das Arbeitsmedium von dem Kondensator (110) dem zweiten Fluidlauf zuführbar ist und ferner von dem zweiten Fluidlauf dem Verdampfer (120) zuführbar ist, und
wobei der erste Fluidlauf und der zweite Fluidlauf derart zueinander angeordnet sind, dass thermische Energie von dem Arbeitsmedium in dem ersten Fluidlauf an das Arbeitsmedium in dem zweiten Fluidlauf übertragbar ist.

6. Kraft-Wärme-Kopplungsanordnung (100) gemäß einem der Ansprüche 1 bis 5, ferner aufweisend
eine Bypassleitung (104), welche mit der Turbine (130) und mit dem Kondensator (110) gekoppelt ist, so dass zumindest ein Teil des Arbeitsmediums in dem dampfförmigen Zustand von der Turbine (130) dem Kondensator (110) direkt zuführbar ist.

7. Kraft-Wärme-Kopplungsanordnung (100) gemäß Anspruch 6, ferner aufweisend
einen dritten Rekuperator (153) mit einem ersten Fluidlauf und einem zweiten Fluidlauf,
wobei der dritte Rekuperator (153) in der Bypassleitung (104) derart angeordnet ist, dass das zumindest ein Teil des Arbeitsmediums von der Turbine (130) dem ersten Fluidlauf zuführbar ist und ferner von dem ersten Fluidlauf dem Kondensator (110) zuführbar ist,
wobei der dritte Rekuperator (153) ferner mit dem Kondensator (110) und dem Verdampfer (120) derart gekoppelt ist, dass das Arbeitsmedium von dem Kondensator (110) dem zweiten Fluidlauf zuführbar ist und ferner von dem zweiten Fluidlauf dem Verdampfer (120) zuführbar ist, und
wobei der erste Fluidlauf und der zweite Fluidlauf derart zueinander angeordnet sind, dass thermische Energie von dem Arbeitsmedium in dem ersten Fluidlauf an das Arbeitsmedium in dem zweiten Fluidlauf übertragbar ist.

8. Kraft-Wärme-Kopplungsanordnung (100) gemäß Anspruch 6 oder 7, ferner aufweisend
ein Steuerventil (101; 102; 103), welches zwischen der Turbine (130) und dem Kondensator (110) angeordnet ist, so dass ein Massenstrom des Arbeitsmediums, welcher durch den Wärmtauscher (140) fließt, einstellbar ist.

9. Kraft-Wärme-Kopplungsanordnung (100) gemäß einem der Ansprüche 1 bis 8, ferner aufweisend
einen Generator (180), welcher mit der Turbine (130) gekoppelt ist, so dass der Generator (180) mittels der Turbine (130) antreibbar ist.

10. Thermodynamisches System, aufweisend
die Kraft-Wärme-Kopplungsanordnung (100) gemäß einem der Ansprüche 1 bis 9, und
die Nutzwärmeanordnung (170),
wobei der Wärmetauscher (140) derart mit der Nutzwärmeanordnung (170) gekoppelt ist, dass thermische Energie vom dem Arbeitsmedium an das Nutzfluid der Nutzwärmeanordnung (170) abgebbar ist.

11. Verfahren zur Gewinnung von Nutzwärme, das Verfahren aufweisend
Zuführen eines Arbeitsmediums von einem Verdampfer (120) zu einer Turbine (130) in einem dampfförmigen Zustand,
Umwandeln von thermischer Energie des Arbeitsmediums in mechanische Arbeit mittels der Turbine (130),
Zuführen des Arbeitsmediums in dem dampfförmigen Zustand von der Turbine (130) zu einem Wärmetauscher (140),
Abgeben von thermischer Energie von dem Arbeitsmedium zu einem Nutzfluid einer Nutzwärmeanordnung (170) mittels des Wärmetauschers (140),
Zuführen des Arbeitsmediums in dampfförmigen Zustand von dem Wärmetauscher (140) zu einem Kondensator(110),
Überführen des Arbeitsmediums von dem dampfförmigen Zustand in einen ersten Zustand, insbesondere einem flüssigen Zustand, mittels des Kondensators (110), und
Zuführen des Arbeitsmediums in dem ersten Zustand von dem Kondensator (110) zu dem Verdampfer (120), und **gekennzeichnet durch** die folgenden Verfahrensschritte:
Zuführen des Arbeitsmediums von dem Wärmetauscher (140) zu einem ersten Fluidlauf eines ersten Rekuperators (150) und ferner von dem ersten Fluidlauf zu dem Kondensator (110), und
Zuführen des Arbeitsmediums von dem Kondensator (110) zu einem zweiten Fluidlauf des ersten Rekuperators (150) und ferner von dem zweiten Fluidlauf zu dem Verdampfer (120),
wobei der erste Fluidlauf und der zweite Fluidlauf derart zueinander angeordnet sind, dass thermische Energie von dem Arbeitsmedium in dem ersten Fluidlauf an das Arbeitsmedium in dem zweiten Fluidlauf übertragbar ist.

## Claims

1. Combined heat and power generation arrangement (100) having an evaporator (120), wherein the evaporator (120) is set up to transform a working medium from a first state, in particular a liquid state, into a vaporous state, a turbine (130) for converting thermal energy into mechanical work, wherein the turbine (130) is coupled to the evaporator (120) in such a manner that the working medium can be supplied from the evaporator (120) to the turbine (130) in the vaporous state, a heat exchanger (140) which is coupled to the turbine (130) so that the working medium can be supplied from the turbine (130) in the vaporous state to the heat exchanger (140), wherein the heat exchanger (140) can be coupled to a useful heat arrangement (170) in such a manner that thermal energy can be delivered from the working medium to a useful fluid of the useful heat arrangement (170), a condenser (110) to which the working medium can be supplied from the heat exchanger (140) in the vaporous state, wherein the condenser (110) is set up to transform the working medium from the vaporous state into the first state by means of cooling, and wherein the condenser (110) is coupled to the evaporator (120) so that the working medium can be supplied in the first state from the condenser (110) to the evaporator (120), and **characterized in that** the combined heat and power generation arrangement has a first recuperator (150) with a first fluid course and a second fluid course, wherein the first recuperator (150) is coupled to the heat exchanger (140) and to the condenser (110) in such a manner that the working medium can be supplied from the heat exchanger (140) to the first fluid course and can furthermore be supplied from the first fluid course to the condenser (110),
wherein the first recuperator (150) is furthermore coupled to the condenser (110) and to the evaporator (120) in such a manner that the working medium can be supplied from the condenser (110) to the second fluid course and can furthermore be supplied from the second fluid course to the evaporator (120), and wherein the first fluid course and the second fluid course are arranged in relation to one another in such a manner that thermal energy can be transferred from the working medium in the first fluid course to the working medium in the second fluid course.

2. Combined heat and power generation arrangement (100) according to Claim 1, wherein the turbine (130) is set up in such a manner that the entire working medium, which can be fed into the turbine (130) at a turbine inlet of the turbine (130), can be discharged at a turbine outlet of the turbine (130).

3. Combined heat and power generation arrangement (100) according to Claim 1 or 2, wherein the working medium comprises an organic medium, in particular silicone oil, toluene, isopentane, isooctane, R134a, R236, R1234ze and/or R1234yf.

4. Combined heat and power generation arrangement (100) according to one of Claims 1 to 3, wherein the evaporator (120) can be coupled to a heating arrangement (160) in such a manner that thermal energy can be delivered from a heating fluid of the heating arrangement (160) to the working medium in the evaporator (120), and wherein the evaporator (120) is set up to transform the working medium from the liquid state into the vaporous state by means of the thermal energy from the heating arrangement (160).

5. Combined heat and power generation arrangement (100) according to one of Claims 1 to 4, also having a second recuperator (152) with a first fluid course and a second fluid course, wherein the second recuperator (152) is coupled to the turbine (130) and to the heat exchanger (140) in such a manner that the working medium can be supplied from the turbine (130) to the first fluid course and can furthermore be supplied from the first fluid course to the heat exchanger (140), wherein the second recuperator (152) is furthermore coupled to the condenser (110) and to the evaporator (120) in such a manner that the working medium can be supplied from the condenser (110) to the second fluid course and can furthermore be supplied from the second fluid course to the evaporator (120), and wherein the first fluid course and the second fluid course are arranged in relation to one another in such a manner that thermal energy can be transferred from the working medium in the first fluid course to the working medium in the second fluid course.

6. Combined heat and power generation arrangement (100) according to one of Claims 1 to 5, also having a bypass line (104) which is coupled to the turbine (130) and to the condenser (110) so that at least one part of the working medium in the vaporous state can be directly supplied from the turbine (130) to the condenser (110).

7. Combined heat and power generation arrangement (100) according to Claim 6, also having a third recuperator (153) with a first fluid course and a second fluid course, wherein the third recuperator (153) is arranged in the bypass line (104) in such a manner that the at least one part of the working medium can be supplied from the turbine (130) to the first fluid course and can furthermore be supplied from the first fluid course to the condenser (110), wherein the third recuperator (153) is furthermore coupled to the condenser (110) and to the evaporator (120) in such a manner that the working medium can be supplied from the condenser (110) to the second fluid course and can furthermore be supplied from the second fluid course to the evaporator (120), and wherein the first fluid course and the second fluid course are arranged in relation to one another in such a manner that thermal energy can be transferred from the working medium in the first fluid course to the working medium in the second fluid course.

8. Combined heat and power generation arrangement (100) according to Claim 6 or 7, also having a control valve (101; 102; 103) which is arranged between the turbine (130) and the condenser (110) so that a mass flow of the working medium flowing through the heat exchanger (140) can be set.

9. Combined heat and power generation arrangement (100) according to one of Claims 1 to 8, also having a generator (180) which is coupled to the turbine (130) so that the generator (180) can be driven by means of the turbine (130).

10. Thermodynamic system, having the combined heat and power generation arrangement (100) according to one of Claims 1 to 9, and the useful heat arrangement (170), wherein the heat exchanger (140) is coupled to the useful heat arrangement (170) in such a manner that thermal energy can be delivered from the working medium to the useful fluid of the useful heat arrangement (170).

11. Method for obtaining useful heat, the method including supplying a working medium from an evaporator (120) to a turbine (130) in a vaporous state,
converting thermal energy of the working medium into mechanical work by means of the turbine (130),
supplying the working medium in the vaporous state from the turbine (130) to a heat exchanger (140),
delivering thermal energy from the working medium to a useful fluid of a useful heat arrangement (170) by means of the heat exchanger (140),
supplying the working medium in the vaporous state from the heat exchanger (140) to a condenser (110),
transforming the working medium from the vaporous state into a first state, in particular a liquid state, by means of the condenser (110), and
supplying the working medium in the first state from the condenser (110) to the evaporator (120),
and being **characterized by** the following method steps:
supplying the working medium from the heat exchanger (140) to a first fluid course of a first recuperator (150) and furthermore from the first fluid course to the condenser (110), and
supplying the working medium from the condenser (110) to a second fluid course of the first recuperator (150) and furthermore from the second fluid course to the evaporator (120),
wherein the first fluid course and the second fluid course are arranged in relation to one another in such a manner that thermal energy can be transferred from the working medium in the first fluid course to the working medium in the second fluid course.

## Revendications

1. Installation de couplage chaleur-force (100) comprenant
un évaporateur (120),
l'évaporateur (120) étant conçu pour faire passer un fluide de travail d'un premier état, notamment d'un état liquide, à un état de vapeur,
une turbine (130) pour transformer l'énergie thermique en travail mécanique,
la turbine (130) étant couplée à l'évaporateur (120) de telle manière que le fluide de travail peut être acheminé de l'évaporateur (120) vers la turbine (130) à l'état de vapeur,
un échangeur de chaleur (140) couplé à la turbine (130) de manière que le fluide de travail peut être acheminé de la turbine (130) à l'état de vapeur vers l'échangeur de chaleur (140),
l'échangeur de chaleur (140) pouvant être couplé à un dispositif de chaleur utile (170) de telle manière que l'énergie thermique peut être cédée par le fluide de travail à un fluide du dispositif de chaleur utile (170),
un condenseur (110) vers lequel le fluide de travail issu de l'échangeur de chaleur (140) peut être acheminé à l'état de vapeur,
le condenseur (110) étant conçu pour faire passer le fluide de travail au moyen d'un refroidissement de l'état de vapeur dans le premier état, et
le condenseur (110) étant couplé à l'évaporateur (120) de manière que le fluide de travail dans le premier état peut être acheminé du condenseur (110) vers l'évaporateur (120),
et **caractérisé en ce que** l'installation de couplage chaleur-force (100) comprend un premier récupérateur (150) avec un premier circuit de fluide et un deuxième circuit de fluide,
le premier récupérateur (150) étant couplé à l'échangeur de chaleur (140) et au condenseur (110) de telle manière que le fluide de travail peut être acheminé de l'échangeur de chaleur (140) vers le premier circuit de fluide et acheminé en outre du premier circuit de fluide vers le condenseur (110),
le premier récupérateur (150) étant couplé en outre au condenseur (110) et à l'évaporateur (120) de telle manière que le fluide de travail peut être acheminé du condenseur (110) vers le deuxième circuit de fluide et acheminé en outre du deuxième circuit de fluide vers l'évaporateur (120), et
le premier circuit de fluide et le deuxième circuit de fluide étant agencés l'un par rapport à l'autre de telle manière que de l'énergie thermique peut être transmise du fluide de travail dans le premier circuit de fluide au fluide de travail dans le deuxième circuit de fluide.

2. Installation de couplage chaleur-force (100) selon la revendication 1,
la turbine (130) étant conçue de telle manière que l'ensemble du fluide de travail injectable dans la turbine (130) à une entrée de turbine de la turbine (130) peut être évacué à une sortie de turbine de la turbine (130).

3. Installation de couplage chaleur-force (100) selon la revendication 1 ou 2,
le fluide de travail comprenant un fluide organique, en particulier de l'huile de silicone, du toluène, de l'isopentane, de l'isooctane, du R134a, R236, R1234ze et/ou R1234yf.

4. Installation de couplage chaleur-force (100) selon l'une des revendications 1 à 3,
l'évaporateur (120) pouvant être couplé à un dispositif de chauffage (160) de telle manière que de l'énergie thermique peut être cédée par un fluide de chauffage du dispositif de chauffage (160) au fluide de travail dans l'évaporateur (120), et
l'évaporateur (120) étant conçu pour faire passer le fluide de de travail, au moyen de l'énergie thermique issue du dispositif de chauffage (160), de l'état liquide à l'état de vapeur.

5. Installation de couplage chaleur-force (100) selon l'une des revendications 1 à 4, comprenant en outre
un deuxième récupérateur (152) avec un premier circuit de fluide et un deuxième circuit de fluide,
le deuxième récupérateur (152) étant couplé à la turbine (130) et à l'échangeur de chaleur (140) de telle manière que le fluide de travail peut être acheminé de la turbine (130) vers le premier circuit de fluide et être acheminé en outre du premier circuit de fluide vers l'échangeur de chaleur (140),
le deuxième récupérateur (152) étant couplé en outre au condenseur (110) et à l'évaporateur (120) de telle manière que le fluide de travail peut être acheminé du condenseur (110) vers le deuxième circuit de fluide et être acheminé en outre du deuxième circuit de fluide vers l'évaporateur (120), et
le premier circuit de fluide et le deuxième circuit de fluide étant agencés l'un par rapport à l'autre de telle manière que de l'énergie thermique peut être transmise du fluide de travail dans le premier circuit de fluide au fluide de travail dans le deuxième circuit de fluide.

6. Installation de couplage chaleur-force (100) selon l'une des revendications 1 à 5, comprenant en outre
une conduite de dérivation (104) couplée à la turbine (130) et au condenseur (110) de manière qu'au moins une partie du fluide de travail à l'état de vapeur peut être acheminée directement de la turbine (130) vers le condenseur (110).

7. Installation de couplage chaleur-force (100) selon la revendication 6, comprenant en outre
un troisième récupérateur (153) avec un premier circuit de fluide et un deuxième circuit de fluide,
le troisième récupérateur (153) étant agencé dans la conduite de dérivation (104) de telle manière qu'au moins une partie du fluide de travail peut être acheminée de la turbine (130) vers le premier circuit de fluide et être acheminé en outre du premier circuit de fluide vers le condenseur (110),
le troisième récupérateur (153) étant couplé en outre au condenseur (110) et à l'évaporateur (120) de telle manière que le fluide de travail peut être acheminé du condenseur (110) vers le deuxième circuit de fluide et être acheminé en outre du deuxième circuit de fluide vers l'évaporateur (120), et
le premier circuit de fluide et le deuxième circuit de fluide étant agencés l'un par rapport à l'autre de telle manière que de l'énergie thermique peut être transmise du fluide de travail dans le premier circuit de fluide au fluide de travail dans le deuxième circuit de fluide.

8. Installation de couplage chaleur-force (100) selon la revendication 6 ou 7, comprenant en outre
une vanne de commande (101 ; 102 ; 103) agencée entre la turbine (130) et le condenseur (110) de telle manière qu'un flux massique du fluide de travail traversant l'échangeur de chaleur (140) peut être réglé.

9. Installation de couplage chaleur-force (100) selon l'une des revendications 1 à 8, comprenant en outre
un générateur (180) couplé à la turbine (130) de manière que le générateur (180) peut être entrainé au moyen de la turbine (130).

10. Installation thermodynamique, comprenant
l'installation de couplage chaleur-force (100) selon l'une des revendications 1 à 9, et
le dispositif de chaleur utile (170),
l'échangeur de chaleur (140) étant couplé au dispositif de chaleur utile (170) de telle manière que de l'énergie thermique peut être cédée par le fluide de travail au fluide du dispositif de chaleur utile (170).

11. Procédé de production de chaleur utile, le procédé comprenant les étapes
d'acheminer un fluide de travail d'un évaporateur (120) vers une turbine (130) dans un état de vapeur,
de transformer de l'énergie thermique du fluide de travail en travail mécanique au moyen de la turbine (130),
d'acheminer le fluide de travail à l'état de vapeur de la turbine (130) vers un échangeur de chaleur (140),
de céder de l'énergie thermique du fluide de travail à un fluide d'un dispositif de chaleur utile (170) au moyen de l'échangeur de chaleur (140),
d'acheminer le fluide de travail à l'état de vapeur de l'échangeur de chaleur (140) vers un condenseur (110),
de faire passer le fluide de travail de l'état de vapeur dans un premier état, en particulier un état liquide, au moyen du condenseur (110), et
d'acheminer le fluide de travail dans le premier état du condenseur (110) vers l'évaporateur (120),
et étant **caractérisé par** les étapes de procédé suivantes:
acheminer le fluide de travail de l'échangeur de chaleur (140) vers un premier circuit de fluide d'un premier récupérateur (150) et en outre du premier circuit de fluide vers le condenseur (110), et
acheminer le fluide de travail du condenseur (110) vers un deuxième circuit de fluide du premier récupérateur (150) et en outre du deuxième circuit de fluide vers l'évaporateur (120), le premier circuit de fluide et le deuxième circuit de fluide étant agencés l'un par rapport à l'autre de telle manière que de l'énergie thermique peut être transmise du fluide de travail dans le premier circuit de fluide au fluide de travail dans le deuxième circuit de fluide.
